(19) Europäisches Patentamt
European Patent Office
Office européen des brevets

(11) **EP 2 127 495 B1**

(12) **EUROPÄISCHE PATENTSCHRIFT**

(45) Veröffentlichungstag und Bekanntmachung des Hinweises auf die Patenterteilung:
**06.04.2011 Patentblatt 2011/14**

(21) Anmeldenummer: **08735408.0**

(22) Anmeldetag: **28.01.2008**

(51) Int Cl.:
***H05B 41/231*** *(2006.01)*

(86) Internationale Anmeldenummer:
**PCT/EP2008/050959**

(87) Internationale Veröffentlichungsnummer:
**WO 2008/104431 (04.09.2008 Gazette 2008/36)**

(54) **SCHALTUNGSANORDNUNG UND VERFAHREN ZUR LEISTUNGSANPASSUNG VON HOCHDRUCK-ENTLADUNGSLAMPEN**

CIRCUIT ARRANGEMENT AND METHOD FOR ADAPTING THE OUTPUT OF HIGH-PRESSURE DISCHARGE LAMPS

MONTAGE ET PROCÉDÉ D'ADAPTATION DE PUISSANCE DE LAMPES À DÉCHARGE HAUTE PRESSION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.02.2007 DE 102007009736**

(43) Veröffentlichungstag der Anmeldung:
**02.12.2009 Patentblatt 2009/49**

(73) Patentinhaber: **OSRAM Gesellschaft mit beschränkter Haftung
81543 München (DE)**

(72) Erfinder: **WILKEN, Ludger
10713 Berlin (DE)**

(56) Entgegenhaltungen:
**EP-A- 1 089 599      DE-A1- 19 531 622
DE-A1-102004 045 834**

**Beschreibung**

**Technisches Gebiet**

Die Erfindung bezieht sich auf eine effiziente Hochdrucklampe mit integrierter Elektronik, die bei gleichem Lichtstrom eine Hochdrucklampe höherer Leistung und geringerer Effizienz ersetzen kann. Diese Lampe soll ohne weitere Anpassungen direkt in die vorhandene Brennstelle mit dem vorhandenen konventionellen Vorschaltgerät der Hochdrucklampe geringerer Effizienz eingesetzt werden. Die Erfindung zielt vor allem darauf ab, als effiziente Hochdrucklampe eine Standardlampe verwenden zu können, die im Lichtstrom nicht mit der zu ersetzenden Lampe niedrigerer Effizienz übereinstimmt. Die Erfindung bezieht sich dabei vorzugsweise auf den Ersatz von Hochdruck-Quecksilberdampflampen durch Hochdruck-Natriumdampflampen, die eine höhere Effizienz besitzen. Die Erfindung kann aber natürlich auch mit jeder anderen Lampenpaarung erzielt werden, die einen entsprechenden Unterschied in der Effizienz aufweisen.

**Stand der Technik**

Bisher wurden für Retro-fit-Anwendungen spezielle Lampen hergestellt, die in den Eigenschaften an die zu ersetzenden Lampen angepasst wurden.

Aus der EP 1 089 599 A2 ist eine solche Retro-fit-Anwendung bekannt, die spezielle Lampen mit gleichem Lichtstrom wie die zu ersetzenden Lampen und einen Glimmzünder zur Anpassung der Zündspannung verwendet.

Es gibt seit Jahren Hochdruck-Natriumdampflampen mit einem sogenannten Penning-Gemisch, die durch die anliegende Netzspannung gezündet werden. Diese Lampen sind aus de Groot and van Vliet, The High-Pressure Sodium Lamp, Kluwer Technische Boeken B.V.-Deventer, 1986, Chapter 6, Page 175 bekannt. Diese Hochdruck-Natriumdampflampen haben im Vergleich zu normalen Hochdruck-Natriumdampflampen eine geringere Lichtausbeute. Durch die Neon-Argon-Mischung in diesen Lampen hat das Plasma eine höhere Wärmeleitfähigkeit, was höhere thermische Bogenverluste und damit eine schlechtere Effizienz zur Folge hat. Durch dieses Gasgemisch senkt sich auch die normalerweise deutlich höhere Zündspannung der Hochdruck-Natriumdampflampe auf das Niveau der Hochdruck-Quecksilberdampflampe ab, so dass ein direkter Ersatz am Hochdruck-Quecksilberdampflampen-Vorschaltgerät erst möglich wird.

Dimmerschaltungen nach dem Stand der Technik verwenden üblicherweise eine Schaltung, in der der Schalter in Reihe zur Lampe geschaltet ist. Aus der Applikationsschrift "Littelfuse, Phase Control Using Tyristors, Application Note AN1003, 2004" ist z.B. solch eine Schaltung bekannt.

**Aufgabe**

Es ist Aufgabe der Erfindung eine Hochdruck-Entladungslampe mit integrierter Elektronik zu entwickeln, die einen Lampenbrenner mit hoher Lichtausbeute verwendet. Die Lichtstrom- und damit Leistungsanpassung soll durch eine Dimmerschaltung und die hohen Zündspannungen durch eine Zündvorrichtung erreicht werden, die in die Lampe, vorzugsweise in den Sockelbereich der Lampe integriert werden und zwar so, dass die Dimension der Lampe nicht größer wird als die der zu ersetzenden Lampe.

**Darstellung der Erfindung**

Die Erfindung wird gelöst durch eine Schaltungsanordnung nach dem Anspruch 1 und ein Betriebsverfahren nach dem Anspruch 14.

Die Schaltungsanordnung stellt eine Dimmerschaltung dar die gleichzeitig auch die Funktion des Zündgerätes übernimmt. Der Schalter der Dimmerschaltung ist dabei nicht in Reihe sonder parallel zur Lampe geschaltet. Dies hat den entscheidenden Vorteil einer geringeren Verzerrung des Eingangsstromes.

**Kurze Beschreibung der Zeichnung(en)**

Fig. 1    Schematische Darstellung einer Dimmerschaltung mit in Reihe geschaltetem Schalter.

Fig. 2    Schematische Darstellung einer Dimmerschaltung mit parallel geschaltetem Schalter.

Fig. 3    Strom- und Spannungsverlauf einer Hochdruck- Natriumdampflampe an einer Hochdruck- Quecksilberdampflampendrossel.

Fig. 4    Strom- und Spannungsverlauf einer Hochdruck- Natriumdampflampe an einer Hochdruck- Quecksilberdampflampendrossel an einem Dimmer in Reihenschaltung.

Fig. 5    Schaltungsanordnung für eine Dimmerschaltung mit einem Halbleiterschalter in Reihe zur Lampe.

Fig. 6    Strom- und Spannungsverlauf einer Hochdruck- Natriumdampflampe an einer Hochdruck- Quecksilberdampflampendrossel an einem Dimmer in Parallelschaltung.

Fig. 7    Erfindungsgemäße Schaltungsanordnung für eine Dim- merschaltung mit einem Halbleiterschalter parallel zur Lampe.

**Bevorzugte Ausführung der Erfindung**

Eine Hochdruck-Quecksilberdampflampe mit einer Lampenleistung $P_{HQL}$ und dem Lichtstrom $\Phi_{HQL}$ soll durch eine Hochdruck-Natriumdampflampe (NAV-Lampe) ersetzt werden, deren Lampenleistung $P_{Dim}$ so eingestellt wird, dass der gleiche Lichtstrom erzeugt wird. Die einzusetzende Hochdruck-Natriumdampflampe emittiert bei einer Leistung $P_{NAV}$ den Lichtstrom $\Phi_{NAV}$. Wird angenommen, dass der Lichtstrom bei der NAV Lampe proportional der aufgenommenen Leistung ist so kann die Leistung der Hochdruck-Natriumdampflampe mit einer Dimmerschaltung durch

$$P_{Dim} = P_{NAV} \frac{\Phi_{HQL}}{\Phi_{NAV}} \qquad (1)$$

berechnet werden.

Zur Verdeutlichung wird ein erstes Beispiel angeführt: Es kann z.B. eine Hochdruck-Quecksilberdampflampe mit einer Lampenleistung von 125W ($P_{HQL}$ = 125 W) und einen Lichtrom von $\Phi_{HQL}$ = 6500 lm, die damit eine Lichtausbeute von $\Phi_{HQL}/P_{HQL}$ = 52 lm/W hat durch eine Hochdruck-Natriumdampflampe mit einer sehr viel höheren Lichtausbeute $\Phi_{NAV}/P_{NAV}$ = 100 lm/W ersetzt werden, wobei zur Erzielung des gleichen Lichtstromes nach Gl. 1 eine Leistung von 65W erforderlich ist um den gleichen Lichtstrom wie die 125W Hochdruck-Quecksilberdampflampe zu erzeugen.

Zur Strombegrenzung wird eine Drossel in Reihe zur Lampe geschaltet. Bei der Hochdruck-Quecksilberdampflampe wird eine Drossel mit einer Impedanz von $Z_D$ (Hochdruck-Quecksilberdampflampe) = 143 Ω eingesetzt. Die Lampenspannung beträgt $U_L$ (Hochdruck-Quecksilberdampflampe) = 125 V und der Lampenstrom $I_L$ (Hochdruck-Quecksilberdampflampe) = 1.15 A. Eine im Lichtstrom ähnliche Hochdruck-Natriumdampflampe benötigt zum Betrieb eine Drossel mit $Z_D$ (Hochdruck-Natriumdampflampe) = 202 Ω, wobei sich eine Spannung von $U_L$ (Hochdruck-Natriumdampflampe) = 86 V und ein Strom von $I_L$ (Hochdruck-Natriumdampflampe) = 0.88 A einstellt (Tabelle 2). Sowohl die Lampenspannung als auch der Lampenstrom sind bei der Hochdruck-Natriumdampflampe deutlich kleiner als bei der Hochdruck-Quecksilberdampflampe. Zum Betrieb einer Hochdruck-Natriumdampflampe Lampe an einer Hochdruck-Quecksilberdampflampendrossel ist eine zusätzliche Schaltung erforderlich, die den mittleren Strom einer Halbwelle reduziert, womit die Gastemperatur und damit die Leitfähigkeit des Lichtbogens auf einen bestimmten Wert eingestellt wird. Dies kann eine elektronische Schaltung, beispielsweise eine Dimmerschaltung sein.

**Aufbau der Schaltungsanordnung**

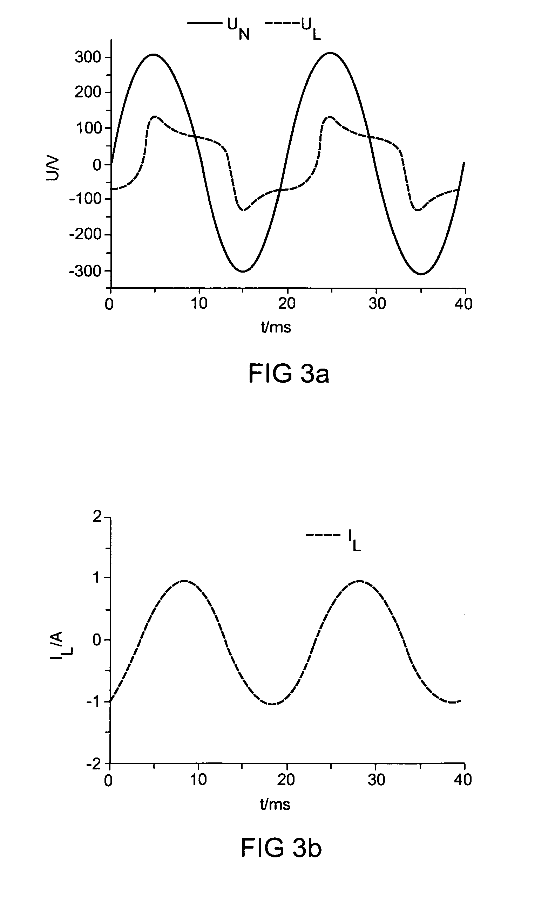

Um die erfindungsgemäße Schaltungsanordnung zu erläutern, wird ein weiteres Ausführungsbeispiel herangezogen. Es soll eine 125W Hochdruck-Quecksilberdampflampe durch eine 65W Hochdruck-Natriumdampflampe mit hoher Lichtausbeute ersetzt werden. Fig 3 zeigt den Spannungs- und Stromverlauf dieser 65W Hochdruck-Natriumdampflampe an einer 60 W Hochdruck-Natriumdampflampendrossel. Da diese 65 W Hochdruck-Natriumdampflampe an der 125W Hochdruck-Quecksilberdampflampendrossel betrieben werden soll, muss die Hochdruck-Natriumdampflampe gedimmt werden.

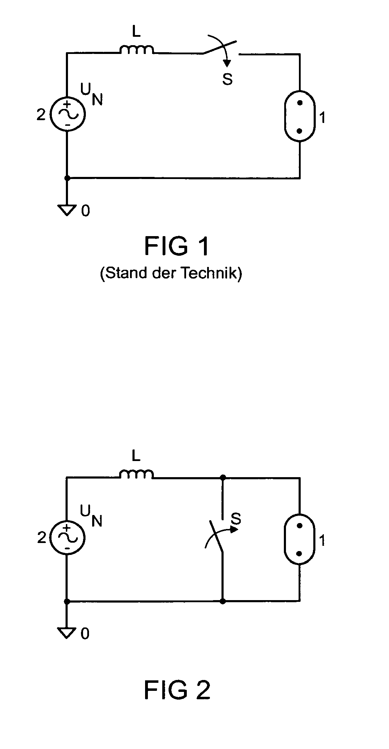

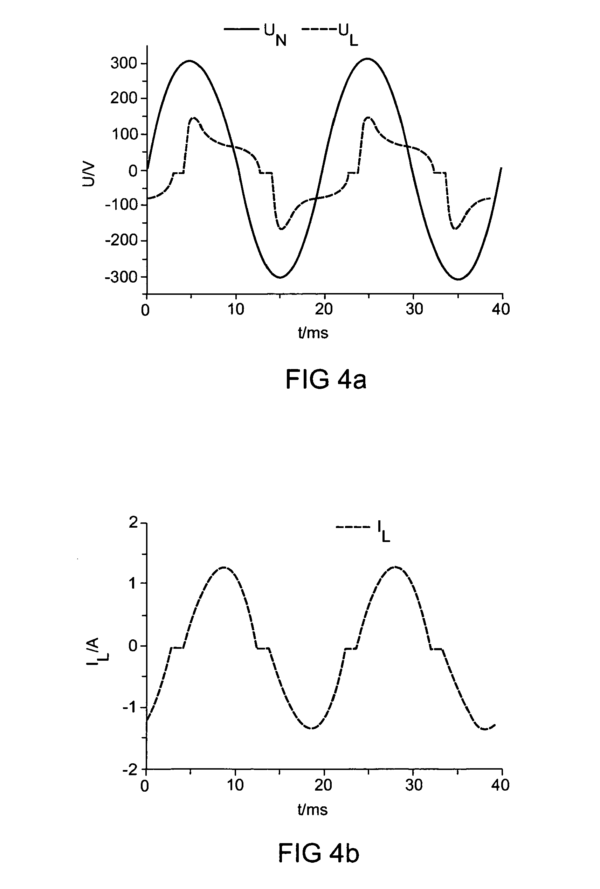

Bei klassischen Dimmerschaltungen für Glühlampen wird ein Schalter in Reihe zur Lampe mit der Netzperiode ein- und ausgeschaltet (Fig. 1). Damit wird die über eine Periode gemittelte Spannung, Strom und Leistung reduziert. Fig. 4 zeigt den Spannungs- und Stromverlauf einer mit solch einer Schaltung gedimmten Hochdruck-Natriumdampflampe. In der Regel wird als elektronischer Schalter (S) ein Triac verwendet. Im gesperrten Zustand ist dieser hochohmig und im durchgeschalteten Zustand niederohmig. Durch einen Zündimpuls auf den Steuereingang wird dieser durchgeschaltet und bei einem Stromnulldurchgang schaltet dieser wieder aus. Bei der Phasenanschnittsteuerung wird dieser Triac eine gewisse Zeit nach dem Spannungsnulldurchgang eingeschaltet. Hierzu wird von der anliegenden Netzspannung über einen Widerstand ein Kondensator aufgeladen. Nach dem Aufbau einer gewissen Spannung wird der Diac niederohmig und lässt einen Zündimpuls auf den Steuereingang des Triacs passieren. Der Triac wird durchgeschaltet. Die an der Lampe anliegende Spannung steigt an bis die Lampe wieder in den leitfähigen Zustand übergeht und ein Strom fließt. Diese Schaltung hat die Eigenschaft, dass der Eingangsstrom stark verzerrt ist, damit haben die Harmonischen des Stromes im Verhältnis zur Grundwelle einen großen Anteil.

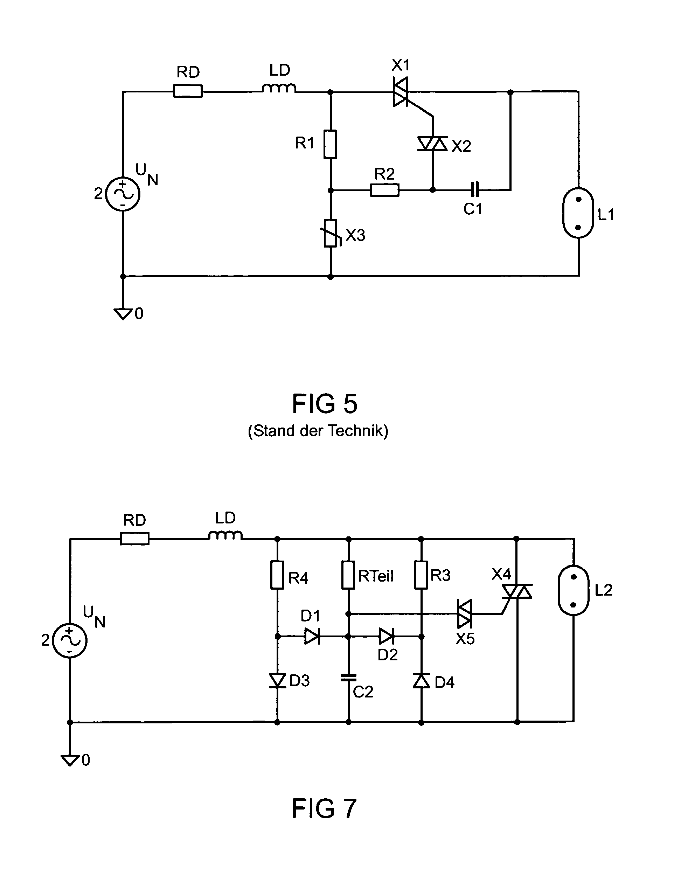

Eine Schaltung nach dem bekannten Stand der Technik ist z.B. in Fig. 5 dargestellt. In dieser Schaltung ist $V_N$ die Netzspannung und die Reihenschaltung von $R_p$ und $L_p$ das vereinfachte Ersatzschaltbild der Drossel. Der Triac X1 wird durch den Diac X2 nach einer gewissen Zeit nach dem Spannungsnulldurchgang gezündet womit der Stromkreis geschlossen und die Lampe L1 eingeschaltet wird. Der Kondensator C1 wird durch den Spannungsteiler aus dem Widerstand R1 und dem Varistor X3 und dem Reihenwiderstand R2 und dem leitfähigen Kanal in der Lampe L1 aufgeladen. Sobald die am Kondensator C1 anliegende Spannung größer ist als die Zündspannung des Diacs X2 (30 V) gibt dieser den Zündimpuls an den Triac X1, der den Lampenstromkreis schließt. Der Kondensator wird durch den Diac X2 auf eine Restspannung (19 V) entladen. Nach dem Durchschalten wird der Kondensator durch das Widerstandsnetzwerk entladen. Beim Stromnulldurchgang schließt der Triac X1. In der folgenden Halbwelle wird der Kondensator wieder aufgeladen. Die Bauelemente in der Ansteuerschaltung werden so gewählt, dass sich die gewünschte Leistung einstellt. Bei dieser Art von Dimmerschaltung ergibt sich jedoch ein Problem mit den Harmonischen des Stromes.

Durch die Harmonischen im Strom werden Leitungen und Generatoren belastet. Bei hohem Stromanteil in den höheren Harmonischen müssen die Systeme für größere Leistungen ausgelegt werden, was höhere Kosten verursacht. In vielen Staaten gibt es daher Grenzwerte, die den Anteil der n.ten zur 1.ten Harmonischen, der Grundwelle, festlegen.

Bei Entladungslampen darf der Versorgungsstrom, des Systems Lampe mit Vorschaltgerät z.B. die in Tabelle 1 gegebenen Werte der IEC 1000-3-2 nicht überschreiten. λ ist der Leistungsfaktor:

$$\lambda = \frac{P_s}{U_N I_N} \qquad (2)$$

Hierin sind $U_N$ und $I_N$ der Effektivwert der Spannung und des Stromes. $P_S$ ist die Systemleistung, die aus der Summe der Lampenleistung $P_L$ und der von der Drossel aufgenommenen Leistung berechnet wird. Kritisch ist der Anteil der 3.ten zur 1.ten Harmonischen. Dieser darf einen Wert von 0.3 λ nicht überschreiten, siehe Tabelle 1.

Tabelle 1: Grenzwerte der Verhältnisse der n.ten Harmonischen zur 1.ten Harmonischen nach IEC 1000-3-2.

| n | 2 | 3 | 5 | 7 | 9 |
|---|---|---|---|---|---|
| Verhältnis | $I_2 / I_1$ | $I_3 / I_1$ | $I_5 / I_1$ | $I_7 / I_1$ | $I_9 / I_1$ |
| Grenzwert | 2% | 0.3 λ | 10% | 7% | 5% |

Um das Problem zu verdeutlichen wird das erste Beispiel wieder kurz aufgegriffen: Eine Hochdruck-Natriumdampflampe, die mit einem Lampendimmer mit in Reihe geschaltetem Schaltelement betrieben wird hat eine Systemleistung von $P_S$ = 65,6 W ($P_L$) + 11,1 W ($P_N$), liegt an einer Spannung von $U_N$ = 220 V, und lässt einen Strom IN = 0.907 A fließen. Gegenüber dem Betrieb mit der 125W Hochdruck-Quecksilberdampflampe reduziert sich die Systemleistung von 125W + 15W auf 76,7 W beim Betrieb mit der Phasenanschnittsteuerung bei gleichem Lichtstrom. Es ergeben sich folgende Harmonische des Stromes: Bei der Berechnung des Grenzwertes gemäß der Norm ergibt sich ein Wert von: 0.3 λ = 11,6 %. Der gemessene Anteil der 3-ten zur 1-ten Harmonischen des Stromes beträgt: 13 / I1 = 15,9%, was deutlich oberhalb des Grenzwertes liegt. Daher ist eine Dimmerschaltung nach dem Stand der Technik nicht geeignet für Retro-fit-Anwendungen.

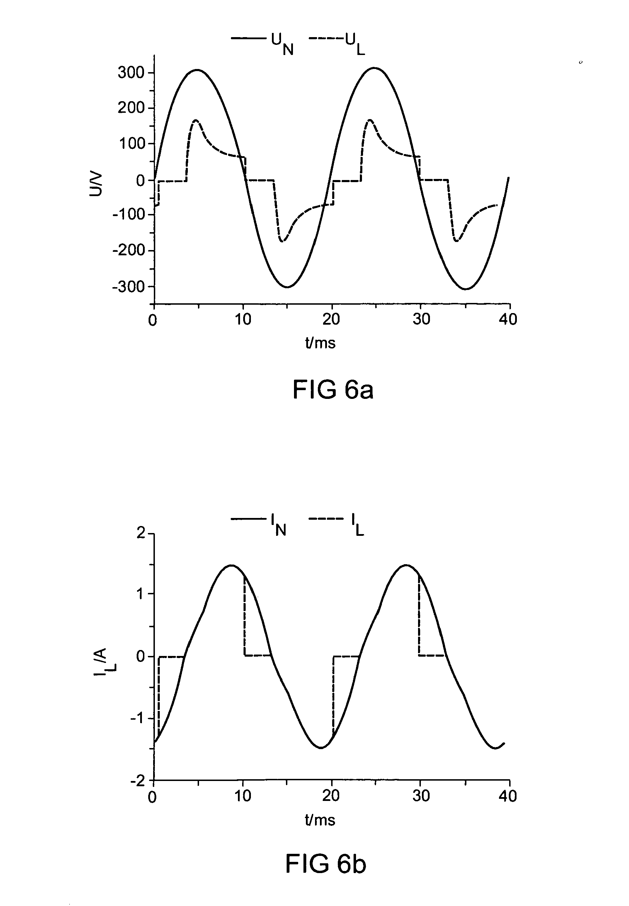

Bei der erfindungsgemäßen Schaltung wird nach der Drossel ein Schalter parallel zur Lampe geschaltet (Fig. 2). Dieser Schalter schließt periodisch den Stromkreis kurz, womit an der Lampe die Spannung verschwindet und die Lampe verlöscht (Fig. 6). Da die Impedanz der Drossel größer ist als der Widerstand der Lampe ändert sich beim Schließen des Kurzschlussschalters der Eingangsstrom kaum, womit der Eingangsstrom kaum verzerrt ist und der Anteil der Harmonischen zur Grundwelle kaum erhöht wird. Es sei erwähnt, dass bei der Zündung oder beim Verlöschen der Lampe die Drossel hohe Spannungen erzeugt, die den elektronischen Schalter bei nicht vorhandener Schutzvorrichtung zerstören bzw. zünden können. Das Zündgerät und die erfindungsgemäße Dimmerschaltung sind daher aufeinander abzustimmen. Im Prinzip ist jede geeignete Zündgerätetopologie denkbar, bevorzugt wird jedoch ein angepasstes Überlagerungszündgerät, das bei Hochdrucklampen weite Verbreitung gefunden hat.

Eine erfindungsgemäße Schaltung mit einem Schalter parallel zur Lampe ist in Fig. 7 dargestellt. Der elektronische Schalter ist wiederum ein kostengünstiger Triac. Ein Triac kann zu beliebigen Zeiten eingeschaltet aber nur mit einem Stromnulldurchgang ausgeschaltet werden. Der Triac muss damit eine gewisse Zeit nach einem Stromnulldurchgang eingeschaltet werden, wozu eine Phasenanschnittsteuerung benötigt wird. Von der Lampe aus gesehen handelt es sich um einen Phasenabschnitt.

Bei der Phasenansteuerschaltung wird über einen Widerstand RTeil ein Kondensator C2 aufgeladen. Bei einer gewissen Spannung schaltet der Diac X5 den Triac X4 ein. Der Wert des Widerstandes RTeil wird so gewählt, dass sich die gewünschte Leistung einstellt. Allerdings stellt sich kein symmetrischer Lampenstrom ein, was bedeutet, dass die Zeitdifferenzen vom Nulldurchgang bis zum Zünden des Triac's in der positiven Halbwelle nicht die gleichen sind wie in der negativen Halbwelle. Daher wird die Schaltung erweitert, um so zu einer hysteresefreien Phasen-Kontrollschaltung zu kommen. Die Grundschaltung aus RTeil und C2 wird hierbei durch das Netzwerk aus den Widerständen R3, R4 und den Dioden D1, D2, D3, D4 ergänzt. Dies führt zu einem symmetrischen Lampenstrom.

Bei dieser erfindungsgemäßen Schaltungsanordnung wird die Stromaufnahme des Gesamtsystems deutlich weniger verzerrt als bei einer Schaltungsanordnung nach dem Stand der Technik. Dies sei an den Beispielen der 65W Hochdruck-Natriumdampflampe aus den Fig. 4 und 6 verdeutlicht:

*Tabelle 2: Parameter einer Hochdruck-Natriumdampflampe an versch. Schaltungen, $U_N$ = 220 V, f = 50 Hz.*

| Anordnung Schalter | Ohne | In Reihe zur Lampe | Parallel zur Lampe |
|---|---|---|---|
| Drossel | Angepasst etwa 60 W NAV | 125 W HQL | 125 W HQL |
| Tastpause [ms] | | 1.4 | 3.25 |
| $Z_D$ [Q] | 202 | 143 | 143 |
| $L_D$ [mH] | 643 | 457 | 457 |
| $R_D$ [Ω] | 15.4 | 12.7 | 12.7 |
| $U_L$ [V] | 86 | 88 | 89 |
| $P_S$ [W] | 79.6 | 76.7 | 80.7 |
| $P_L$ [W] | 67 | 65.6 | 65.4 |
| $I_N$ [A] | 0.879 | 0.907 | 1.07 |
| $U_{pk}$ [V] | 135 | 165 | 176 |
| 0.3 λ [%] | 12.4 | 11.6 | 10.3 |
| $I_3 / I_1$ [%] | 5.2 | 13.1 | 4.0 |
| $I_5 / I_1$ [%] | 1.4 | 4.9 | 3.0 |
| $I_7 / I_1$ [%] | 0.4 | 3.3 | 1.3 |
| $I_9 / I_1$ [%] | 0.2 | 2.3 | 0.4 |

Im folgenden wird die bekannte Dimmerschaltung nach Fig. 5 behandelt.

In Fig. 4 ist die Lampenspannung $U_L$ und der Lampenstrom $I_L$ bei einer Phasenanschnittsteuerung mit einem Schalter in Reihe zur Lampe gezeigt und in Tabelle 2 die zugehörigen zeitlich gemittelten Größen. Bei der Phasenanschnittsteuerung wird die Spannung $U_L$ nach dem Stromnulldurchgang um 1.4 ms verspätet eingeschaltet. Aufgrund der Tastpause von 1.4 ms kühlt sich der Bogen mehr ab als beim kontinuierlichen Betrieb womit die womit die Widerzündspitze $U_{pk}$ sich erhöht. Es ist jedoch erkennbar, dass die Widerzündspitzen noch sehr viel kleiner sind als die Netzspannung $U_N$. Der Lampenstrom $I_L$ ist gleich dem Eingangsstrom IN.

Der erlaubte Anteil des Stromes in der dritten Harmonischen ist 0.3λ = 11.6% während der reale Wert mit $I_3 / I_1$ = 13.1% deutlich oberhalb des Grenzwertes liegt. Der Stromanteil der 5.ten Harmonischen erreicht fast den Grenzwert und der Stromanteil in der 7.ten Harmonischen ist gleich dem Grenzwert. Damit wird eine mit einer Dimmerschaltung nach dem Stand der Technik gedimmte Hochdruck-Natriumdampflampe die Norm IEC 1000-3-2 nicht erfüllen.

Nun wird auf die erfindungsgemäße Schaltung nach Fig. 7 eingegangen.

In Fig. 6 ist zu erkennen, dass die Lampenspannung $U_L$ und der Lampenstrom $I_L$ vor dem Ende der Halbwelle zusammenbricht. Die Tastpause ist hier 3.25 ms. In der darauf folgenden Halbwelle zeigt sich eine erhöhte Wiederzündspannung von $U_{pk}$ = 176 V, die vergleichbar ist mit dem Wert bei der Schaltung mit dem Schalter in Reihe zur Lampe. Zum Zeitpunkt des Kurzschließens des Triacs ändert sich der Eingangsstrom IN nur wenig, so dass der Eingangsstrom kaum zusätzlich verzerrt ist. Der Wert von I3 / I1 = 4.0% (Tabelle 2) liegt deutlich unterhalb des erlaubten Grenzwertes von 10.3%. Auch der Anteil des Stromes der höheren Harmonischen (Tabelle 2) liegt deutlich unterhalb der Grenzwerte (Tabelle 1). Damit kann eine Hochdruck-Natriumdampflampe die mit einem parallel zur Lampe geschalteten Schalter realisiert wird die Norm IEC 1000-3-2 erfüllen.

Die Systemleistungsaufnahme der mit einem Schalter parallel zur 65 W Hochdruck-Natriumdampflampe betrieben an der Drossel der 125 W Hochdruck-Quecksilberdampflampe beträgt $P_s$ = 80.7 W was gegenüber dem Betrieb mit einer 125 W Hochdruck-Quecksilberdampflampe an der 125 W Hochdruck-Quecksilberdampflampendrossel ($P_s$ = 140 W) einer Leistungseinsparung von 43% bei gleichem Lichtstrom bedeutet.

Mit solch einer Schaltung kann also eine Lampe mit niedriger Effizienz durch eine ähnliche gedimmte Lampe höherer Effizienz ersetzt werden. Das für die Lampe niedriger Effizienz ausgelegte Vorschaltgerät kann hierbei beibehalten werden. Damit kann ein direkter Ersatz für ältere Lampentypen geringerer Effizienz geschaffen werden, der deutlich stromsparender ist als das Original.

Die erfindungsgemäße Schaltungsanordnung wird in die Lampe und vorzugsweise direkt in den Lampensockel integriert, so dass außer einem Lampenwechsel keine weiteren Arbeiten anfallen, um den älteren Lampentyp durch eine effizientere Lampe zu ersetzen. Dabei kann es von Vorteil sein, wenn in der Schaltungsanordnung eine Temperaturmessung vorgesehen ist. Diese kann die Temperatur an einen vorbestimmten Punkt $T_c$ an der Wandung des Sockels messen, und bei überhöhter Temperatur zum Schutz der Lampe und der Schaltungsanordnung die Lampe stärker dimmen, um die Temperaturabgabe der Lampe zu begrenzen. Weiterhin kann eine Temperaturabschaltung vorgesehen sein, die bei dauerhaft überhöhter Temperatur der Schaltungsanordnung diese abschaltet.

In einer solchen Lampe mit Dimmer ist es auch möglich eine Schnittstelle zu integrieren, die es erlaubt, weitere Dimmstufen z.B. für eine Nachtabsenkung zu realisieren. Dabei sind verschiedene Signalübertragungswege denkbar, z.B. ein zusätzlicher Steueranschluss, eine Übertragung auf elektromagnetischem Wege o.ä. Die Schnittstelle kann auch einen Eingang für sogenannte Rundsteuersignale besitzen, die die verschiedenen Dimmstufen einstellen. Diese Signale werden auf die normale Stromleitung aufmoduliert und können durch geeignete Filter extrahiert werden.

**Patentansprüche**

1. Schaltungsanordnung zur Leistungsanpassung von Hochdruck-Entladungslampen (1), die zum Betrieb an einer Drossel (L) geeignet ist, wobei die Schaltungsanordnung so angelegt ist, dass sie in der Hochdruck-Entladungslampe (1) angeordnet werden kann, **dadurch gekennzeichnet, dass** die Schaltungsanordnung einen elektronischen Schalter (S) beinhaltet, der parallel zur Lampe (1) geschaltet ist, und die Lampe (1) während des Betriebes periodisch kurzschließt, und diese Parallelschaltung in Reihe zur Drossel (L) angeordnet ist.

2. Schaltungsanordnung nach Anspruch 1, **dadurch gekennzeichnet, dass** die Schaltungsanordnung vorzugsweise in einem Sockel der Hochdruck-Entladungslampe angeordnet ist

3. Schaltungsanordnung nach Anspruch 1 oder 2, **dadurch gekennzeichnet, dass** der elektronische Schalter (S) ein Triac ist.

4. Schaltungsanordnung nach Anspruch 1 oder 2, **dadurch gekennzeichnet, dass** der elektronische Schalter (S) ein Thyristor ist.

5. Schaltungsanordnung nach Anspruch 1 oder 2, **dadurch gekennzeichnet, dass** der elektronische Schalter (S) ein Transistor ist.

6. Schaltungsanordnung nach einem der vorhergehenden Ansprüche, **dadurch gekennzeichnet, dass** eine Ansteuerschaltung für den elektronischen Schalter (S) so konfiguriert ist, dass der Lampenstrom ein reiner Wechselstrom ohne Gleichspannungsanteil ist.

7. Schaltungsanordnung nach einem der vorhergehenden Ansprüche, **dadurch gekennzeichnet, dass** die Ansteuerschaltung für den elektronischen Schalter (S) so abgestimmt ist, dass die Schaltungsanordnung eine vorbestimmte Leistung an die Lampe abgibt.

8. Schaltungsanordnung nach einem der Ansprüche 1 bis 6, **dadurch gekennzeichnet, dass** die Ansteuerschaltung einen Eingang besitzt, über den die Abgabeleistung der Schaltungsanordnung an die Lampe (1) eingestellt werden kann.

9. Schaltungsanordnung nach Anspruch 8, **dadurch gekennzeichnet, dass** ein leitungsgebundenes Signal in den Eingang eingegeben wird.

10. Schaltungsanordnung nach Anspruch 8, **dadurch gekennzeichnet, dass** der Eingang einen Empfänger für elektromagnetische Strahlung besitzt, und dass die Abgabeleistung über ein elektromagnetisches Funksignal gesteuert wird.

11. Schaltungsanordnung nach einem der vorhergehenden Ansprüche, **dadurch gekennzeichnet, dass** die Schaltungsanordnung ein Temperaturmesselement aufweist, das an einer vorbestimmten Stelle des Sockelgehäuses angebracht ist.

12. Schaltungsanordnung nach Anspruch 11, **dadurch gekennzeichnet, dass** sie oberhalb einer vorbestimmten Temperatur des Temperaturmesselementes die Leistungsabgabe an die Lampe reduziert.

13. Schaltungsanordnung nach Anspruch 11 oder 12, **dadurch gekennzeichnet, dass** sie bei einer dauerhaft erhöhten Temperatur oberhalb der vorbestimmten Temperatur die Hochdruck-Entladungslampe (1) abschaltet.

14. Verfahren zum Betreiben von effizienten Hochdruck-Entladungslampen als Ersatz für weniger effiziente Hochdruck-Entladungslampen, **dadurch gekennzeichnet, dass** die effiziente Hochdruck-Entladungslampe (1) bei einer Leistung betrieben wird, die einen Lichtstrom zur Folge hat, der im wesentlichen dem Lichtstrom der zu ersetzenden weniger effizienten Hochdruck-Entladungslampe entspricht, wobei die Leistungseinstellung durch periodisches Kurzschließen der Lampe erfolgt, so dass der Lichtbogen vorzeitig verlöscht.

15. Verfahren nach Anspruch 14, **dadurch gekennzeichnet, dass** das periodische Kurzschließen der Lampe mit der Netzfrequenz synchronisiert ist.

**Claims**

1. Circuit arrangement for adapting the output of high pressure discharge lamps (1) that is suitable for operating with an inductor (L), the circuit arrangement being designed such that it can be arranged in the high pressure discharge lamp (1), **characterized in that** the circuit arrangement includes an electronic switch (S) that is connected in parallel with the lamp (1) and periodically short circuits the lamp (1) during operation, and this parallel circuit is arranged in series with the inductor (L).

2. Circuit arrangement according to Claim 1, **characterized in that** the circuit arrangement is preferably arranged in a base of the high pressure discharge lamp.

3. Circuit arrangement according to Claim 1 or 2, **characterized in that** the electronic switch (S) is a triac.

4. Circuit arrangement according to Claim 1 or 2, **characterized in that** the electronic switch (S) is a thyristor.

5. Circuit arrangement according to Claim 1 or 2, **characterized in that** the electronic switch (S) is a transistor.

6. Circuit arrangement according to one of the preceding claims, **characterized in that** the drive circuit for the electronic switch (S) is configured such that the lamp current is a pure alternating current without a DC component.

7. Circuit arrangement according to one of the preceding claims, **characterized in that** the drive circuit for the electronic switch (S) is tuned such that the circuit arrangement outputs a predetermined power to the lamp.

8. Circuit arrangement according to one of Claims 1 to 6, **characterized in that** the drive circuit has an input via which the output power of the circuit arrangement to the lamp (1) can be set.

9. Circuit arrangement according to Claim 8, **characterized in that** a line-transmitted signal is fed into the input.

10. Circuit arrangement according to Claim 8, **characterized in that** the input has a receiver for electromagnetic radiation, and **in that** the output power is controlled via an electromagnetic radio signal.

11. Circuit arrangement according to one of the preceding claims, **characterized in that** the circuit arrangement has a temperature measuring element that is fitted at a predetermined site on the base housing.

12. Circuit arrangement according to Claim 11, **characterized in that** it reduces the power output to the lamp above a predetermined temperature of the temperature measuring element.

13. Circuit arrangement according to Claim 11 or 12, **characterized in that** it switches off the high pressure discharge lamp (1) in the event of a permanently increased temperature above the predetermined temperature.

14. A method for operating efficient high pressure discharge lamps as a replacement for less efficient high pressure discharge lamps, **characterized in that** the efficient high pressure discharge lamp (1) is operated with an output that entails a light flux which corresponds substantially to the light flux of the less efficient high pressure discharge lamp that is to be replaced, the output setting being performed by periodic short circuiting the lamp such that the arc is prematurely extinguished.

15. Method according to Claim 14, **characterized in that** the periodic short circuiting of the lamp is synchronized with the line frequency.

**Revendications**

1. Montage d'adaptation de puissance de lampes ( 1 ) à décharge à haute pression, qui convient pour le fonctionnement sur une bobine ( L ), dans lequel le montage est tel qu'il peut être disposé dans la lampe ( 1 ) à décharge à haute pression, **caractérisé en ce que** le montage comporte un interrupteur ( S ) électronique, qui est monté en parallèle à la lampe ( 1 ) et qui court-circuite périodiquement la lampe ( 1 ) pendant le fonctionnement et ce circuit parallèle est monté en série avec la bobine ( L ).

2. Montage suivant la revendication 1, **caractérisé en ce que** le montage est disposé, de préférence, dans un culot de la lampe à décharge à haute pression.

3. Montage suivant la revendication 1 ou 2, **caractérisé en ce que** l'interrupteur ( S ) électronique est un triac.

4. Montage suivant la revendication 1 ou 2, **caractérisé en ce que** l'interrupteur ( S ) électronique est un thyristor.

5. Montage suivant la revendication 1 ou 2, **caractérisé en ce que** l'interrupteur ( S ) électronique est un transistor.

6. Montage suivant l'une des revendications précédentes, **caractérisé en ce qu'**un circuit de commande de l'interrupteur ( S ) électronique est configuré, de manière à ce que le courant de la lampe soit un courant alternatif pur, sans proportion de tension continue.

7. Montage suivant l'une des revendications précédentes, **caractérisé en ce que** le circuit de commande est accordé à l'interrupteur ( S ) électronique, de manière à ce que le montage cède une puissance déterminée à l'avance à la lampe.

8. Montage suivant l'une des revendications 1 à 6, **caractérisé en ce que** le circuit de commande a une entrée, par laquelle la puissance cédée à la lampe ( 1 ) par le montage peut être réglée.

9. Montage suivant la revendication 8, **caractérisé en ce qu'**un signal lié à la puissance est appliqué à l'entrée.

10. Montage suivant la revendication 8, **caractérisé en ce que** l'entrée possède un récepteur de rayonnement électromagnétique et **en ce que** la puissance cédée est commandée par un signal radio électromagnétique.

11. Montage suivant l'une des revendications précédentes, **caractérisé en ce que** le montage comporte un élément de mesure de la température, qui est mis en un endroit déterminé à l'avance de l'enveloppe formant culot.

12. Montage suivant la revendication 11, **caractérisé en ce qu'**il réduit la puissance cédée à la lampe au-dessus d'une température déterminée à l'avance de l'élément de mesure de la température.

**13.** Montage suivant la revendication 11 ou 12, **caractérisé en ce que**, s'il se produit d'une manière durable une température en excès au-dessus de la température déterminée à l'avance, il met hors circuit la lampe ( 1 ) à décharge à haute pression.

**14.** Procédé pour faire fonctionner des lampes à décharge à haute pression efficaces en remplacement de lampes à décharge à haute pression moins efficaces, **caractérisé en ce qu'**on fait fonctionner la lampe ( 1 ) à décharge à haute pression efficace à une puissance, qui a pour conséquence un flux lumineux, qui correspond sensiblement au flux lumineux de la lampe à décharge à haute pression moins efficace à remplacer, le réglage de la puissance s'effectuant par des courts-circuits périodiques de la lampe, de manière à éteindre prématurément l'arc électrique.

**15.** Procédé suivant la revendication 14, **caractérisé en ce qu'**on synchronise le court-circuitage périodique de la lampe avec la fréquence du secteur.

## FIG 1
(Stand der Technik)

## FIG 2

FIG 3a

FIG 3b

FIG 4a

FIG 4b

**FIG 5**

(Stand der Technik)

**FIG 7**

FIG 6a

FIG 6b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1089599 A2